# EUROPÄISCHE PATENTSCHRIFT

(11) **EP 2 649 591 B1**
(45) Veröffentlichungstag und Bekanntmachung des Hinweises auf die Patenterteilung: **22.02.2017**
(21) Anmeldenummer: 11801639.3
(22) Anmeldetag: 01.12.2011
(51) Int. Cl.: G07C 9/00, B60R 25/00

(54) **ZUGANGSKONTROLLVERFAHREN FÜR KRAFTFAHRZEUGE**
ACCESS CONTROL METHOD FOR MOTOR VEHICLES
PROCÉDÉ DE CONTRÔLE D'ACCÈS POUR VÉHICULES AUTOMOBILES

(30) Priorität: 09.12.2010 DE 102010061146
(43) Veröffentlichungstag der Anmeldung: 16.10.2013
(73) Patentinhaber: Huf Hülsbeck & Fürst GmbH & Co. KG, 42551 Velbert (DE)
(72) Erfinder: CLEMENS, Peter, 52074 Aachen (DE); VALENZUELA, Edwin Garcia, 51109 Köln (DE)
(74) Vertreter: Zenz Patentanwälte Partnerschaft mbB
(86) Internationale Anmeldenummer: PCT/EP2011/071473
(87) Internationale Veröffentlichungsnummer: WO 2012/076389

(56) Entgegenhaltungen:
- DE-A1- 19 900 415
- FR-A1- 2 868 108
- US-A1- 2006 238 314
- US-A1- 2009 243 795

## Beschreibung

Die Erfindung betrifft ein Verfahren zum Steuern eines schlüssellosen Zugangs an einem Kraftfahrzeug.

Insbesondere betrifft die Erfindung ein Verfahren, bei der zwischen einer fahrzeugseitigen Sendeeinrichtung und einem vom Fahrzeug beabstandeten ID-Geber (Funkschlüssel) eine Funkkommunikation ausgeführt wird.

Derartige elektronische Schließsysteme mit Funkkommunikation sind im Stand der Technik bekannt, beispielsweise aus der DE 4340260 A1. Diese Schließsysteme werden z.B. als Türschließsysteme für die Zugangsberechtigung und/oder als Zündschlosssysteme, zur Lenkradverriegelung, für Wegfahrsperren oder dergleichen eingesetzt.

Allgemein werden derartige Systeme als Keyless-Systeme bezeichnet, wobei der schlüssellose Zugang eine sogenannte Keyless-Entry Funktion darstellt. Es genügt für solche Einrichtungen, dass ein Benutzer beim Zugriff auf ein Fahrzeug einen ID-Geber mit sich führt. Der Zugang zu dem Kraftfahrzeug wird nach einer Funkkommunikation zwischen Fahrzeug und ID-Geber gestattet oder verwehrt. Die Kommunikation selbst wird z.B. durch eine Schalteinrichtung oder Sensoreinrichtung am Türgriff oder im Bereich des Türgriffs ausgelöst. Findet dies statt, so sendet zunächst die Sendeeinrichtung im Kraftfahrzeug ein Wecksignal im Niederfrequenzbereich, z.B. 125 kHz, aus. Dieses Wecksignal wird im ID-Geber registriert, der dazu eine oder mehrere geeignete Transponder-Spulen aufweist. Der ID-Geber antwortet mit einer Hochfrequenz-Funkkommunikation, üblicherweise im Bereich von einigen 100 MHz (z.B. 430 MHz).

Anschließend kann die Fahrzeugeinrichtung weitere Niederfrequenzsignale aussenden, die der ID-Geber zur Entfernungsbestimmung auswertet, um eine Lagebestimmung des ID-Gebers und eine unberechtigte Zugangsanfrage festzustellen.

In der weiteren hochfrequenten bidirektionaler Kommunikation zwischen ID-Geber und Fahrzeug wird eine im ID-Geber gespeicherte Kennung sowie ggf. weitere Daten übermittelt, um fahrzeugseitig die Zugangsberechtigung zu überprüfen.

Die Abläufe gemäß dem Stand der Technik sind grundsätzlich durch die benutzerunabhängigen Abläufe rasch auszuführen und benötigen eine Zeit darauf von einigen 10 ms bis einigen 100 ms.

Bestimmte Schritte dieser Abläufe gemäß dem Stand der Technik können auch parallel ausgeführt werden. Insbesondere können ein im Fahrzeug angeordnetes Modul und der ID-Geber bestimmte Schritte parallel ausführen, s. US 2009/0243795. Des Weiteren ist aus FR 2 868 108 bekannt, eine Messung von Umgebungssignalen im ID-Geber und eine HF-Kommunikation zwischen ID-Geber und Kraftfahrzeug parallel durchzuführen.

Dennoch besteht der Bedarf dafür, die Dauer der Überprüfung einer Zugangsberechtigung weiter zu verkürzen, um die fahrzeugseitigen Systeme rascher auf den Benutzerzugriff vorzubereiten oder mehr Zeit für eine noch sicherere Überprüfung bereitzustellen.

Aufgabe der Erfindung ist es daher, eine Laufzeitoptimierung für schlüssellose Zugangs- und Zugriffssysteme für Kraftfahrzeuge zur Verfügung zu stellen.

Gelöst wird diese Aufgabe durch ein Verfahren mit den Merkmalen des Patentanspruchs 1.

Erfindungsgemäß weist das Verfahren zum Steuern eines schlüssellosen Zugangs zu einem Kraftfahrzeug einen Schritt auf, in dem mit Hilfe einer fahrzeugseitigen Sendeeinrichtung wenigstens ein niederfrequentes (LF) elektromagnetisches Wecksignal ausgesandt wird. Ein vom Fahrzeug beabstandeter und vom Benutzer mitgeführter ID-Geber empfängt das Wecksignal und bringt das System des ID-Gebers in den Bereitschaftszustand für eine Berechtigungsabfrage. Das erfindungsgemäße Verfahren weist außerdem einen Schritt auf, in dem von der fahrzeugseitigen Sendeeinrichtung wenigstens ein weiteres niederfrequentes (LF) elektromagnetisches Entfernungsbestimmungssignal ausgesandt wird. In dem ID-Geber wird das Entfernungsbestimmungssignal empfangen und eine Auswertung zur Feldstärkebestimmung des Entfernungsbestimmungssignals zugeführt. Zwischen einer fahrzeugseitigen Sende- und Empfangseinrichtung und dem ID-Geber wird außerdem eine bidirektionale Hochfrequenzkommunikation (HF) ausgeführt, während welcher vom ID-Geber Kenndaten zur Kontrolle der Zugriffsberechtigung übermittelt werden. Außerdem werden in dieser Kommunikation die vom ID-Geber bestimmten Feldstärken zur Entfernungsbestimmung an die fahrzeugseitige Sende- und Empfangseinrichtung übermittelt. Auf Basis dieser Informationen kann fahrzeugseitig die Zugangsberechtigung verifiziert werden.

Gemäß der Erfindung werden die vorstehenden Schritte mittels eines multitasking-fähigen Systems im ID-Geber so ausgeführt, dass ein Empfang der niederfrequenten Signale und die bidirektionale Hochfrequenzkommunikation im Multitasking ausgeführt werden, wobei der Empfang von LF-Signalen im ID-Geber und eine HF-Kommunikation zwischen ID-Geber und Kraftfahrzeug wenigstens teilweise parallel ablaufen.

Dadurch kann die gesamte Laufzeit des Verifikationsverfahrens zwischen ID-Geber und Kraftfahrzeug in der Dauer verkürzt werden, wie Experimente zeigten um mehr als 30%.

Zur Ausführung der Erfindung können grundsätzlich beliebige Arten von multitaskingfähigen Systemen im ID-Geber eingesetzt werden. Dabei läuft die Hochfrequenzkommunikation weitgehend unabhängig davon ab, ob zeitgleich eine Niederfrequenz vom ID-Geber empfangen wird. Eine Abhängigkeit besteht nur dahingehend, dass von dem LF-Empfang abhängige Auswertungen, z.B. der Feldstärkebestimmungen, während der HF-Kommunikation abgewartet werden können. Grundsätzlich wird jedoch das im Stand der Technik bislang angewandte Verfahren der sequentiellen Kommunikation im LF- und HF-Bereich aufgegeben. Stattdessen findet LF-Empfang und HF-Kommunikation, also Sende- und Empfangsbetrieb im ID-Geber zumindest teilweise zeitgleich statt. Es hat sich gezeigt, dass ein negativer Einfluss der beiden Vorgänge nicht vorhanden ist.

Unter Multitasking ist in diesem Falle grundsätzlich die Fähigkeit des Systems im ID-Geber zu verstehen, die den LF-Betrieb und den HF-Betrieb parallel und nicht sequentiell nacheinander auszuführen. Dazu kann im ID-Geber eine Software ausgeführt werden, welche die gängigen Methoden des Multitasking, z.B. kooperatives Multitasking oder präemptives Multitasking ausführt. Da in einem ID-Geber üblicherweise keine Mehrprozessorsysteme zum Einsatz kommen, wird in diesem Zusammenhang unter Gleichzeitigkeit entsprechend auch ein aus anderen Betriebssystembereichen bekannter Vorgang der raschen abwechselnden Rechenzeitzuweisung verstanden. Wesentlich ist, dass es gemäß der Erfindung einen Zeitbereich während der Autorisierungskontrolle gibt, welcher sowohl für den LF-Empfang im ID-Geber als auch die HF-Kommunikation zwischen Fahrzeug und ID-Geber vorgesehen ist.

In einer bevorzugten Ausführungsform der Erfindung wird die bidirektionale Hochfrequenzkommunikation zwischen dem ID-Geber und dem Kraftfahrzeug gestartet, während vom ID-Geber noch ein Entfernungsbestimmungssignal im LF-Bereich empfangen wird und die Feldstärkebestimmung des empfangenden LF-Signals durchgeführt wird.

Die Entfernungsbestimmung zwischen Kraftfahrzeug und ID-Geber mit Hilfe der Aussendung von LF-Signalen vom Fahrzeug und der Signalstärkebestimmung im ID-Geber nimmt in den üblichen Autorisierungskommunikationen einen beträchtlichen Zeitraum von einigen 10 ms ein. Dieser Zeitraum kann erfindungsgemäß nun zusätzlich für die HF-Kommunikation zwischen ID-Geber und Kraftfahrzeug genutzt werden.

In einer bevorzugten Weiterbildung der Erfindung wird nach Durchführung der Feldstärkebestimmung an den LF-Signalen vom ID-Geber während der bidirektionalen Hochfrequenzkommunikation das Ergebnis der Feldstärkebestimmung an das Kraftfahrzeug übermittelt. Sonstige für die Autorisierung relevante Informationen können bereits vorher, also noch während der Feldstärkebestimmung im ID-Geber mittels Hochfrequenzkommunikation übermittelt werden. Nach Abschluss der Feldstärkebestimmung kann dann die ermittelte Feldstärke nachgeliefert werden.

Ein Zugangssystem für den schlüssellosen Zugriff gemäß der Erfindung weist eine erste fahrzeugseitige Sensoreinrichtung zum Aussenden niederfrequenter (LF) elektromagnetischer Signale vorgesehen. Ein ID-Geber gehört zu dem System und kann vom Benutzer mitgeführt werden, der eine Empfangseinrichtung für das niederfrequente Wecksignal empfangen kann und eine mit einer Empfängerspule gekoppelte Schaltung aufweist, mit deren Hilfe die Feldstärke eines empfangenen niederfrequenten Signals möglich ist. Eine fahrzeugseitige Sende- und Empfangseinrichtung zum Senden und Empfangen von Hochfrequenzsignalen ist zur Kommunikation mit dem ID-Geber ausgebildet, der ebenfalls eine Sende- und Empfangseinrichtung zum Senden und Empfangen von Hochfrequenzsignalen aufweist. In dem ID-Geber ist ein Prozessor vorgesehen, welcher ein multitaskingfähiges System implementiert und so ausgebildet ist, dass zeitgleich im ID-Geber sowohl niederfrequente Signale empfangbar sind, als auch eine bidirektionale Hochfrequenzkommunikation ausführbar ist.

Diese Implementierung eines multitaskingfähigen Systems kann einerseits hardwaremäßig oder andererseits durch die bekannten Methoden des Software-Multitasking erfolgen.

Die Feldstärkebestimmung im ID-Geber kann beispielsweise eine Bestimmung eines RSSI-Wertes umfassen. Dieser Signalstärkewert wird ermittelt, wenn das LF-Signal vom Fahrzeug an den ID-Geber ausgesandt wird.

Im Unterschied zu den bekannten Konzepten, implementiert der ID-Geber bezüglich des LF-Empfangs und der HF-Kommunikation multitaskingfähiges System, entweder durch entsprechender Hardwareausbildung oder einer geeigneten Softwareprogrammierung, welche eine Gleichzeitigkeit der Abläufe virtualisiert.

Die Erfindung wird nun anhand der beiliegenden Zeichnung näher erläutert.
Figur 1 zeigt schematisch den Ablauf einer Funkkommunikation zur Zugriffskontrolle gemäß der Erfindung;
Figur 2 zeigt ein Zeitschema für den Ablauf des Zugriffsverfahrens gemäß der Erfindung.

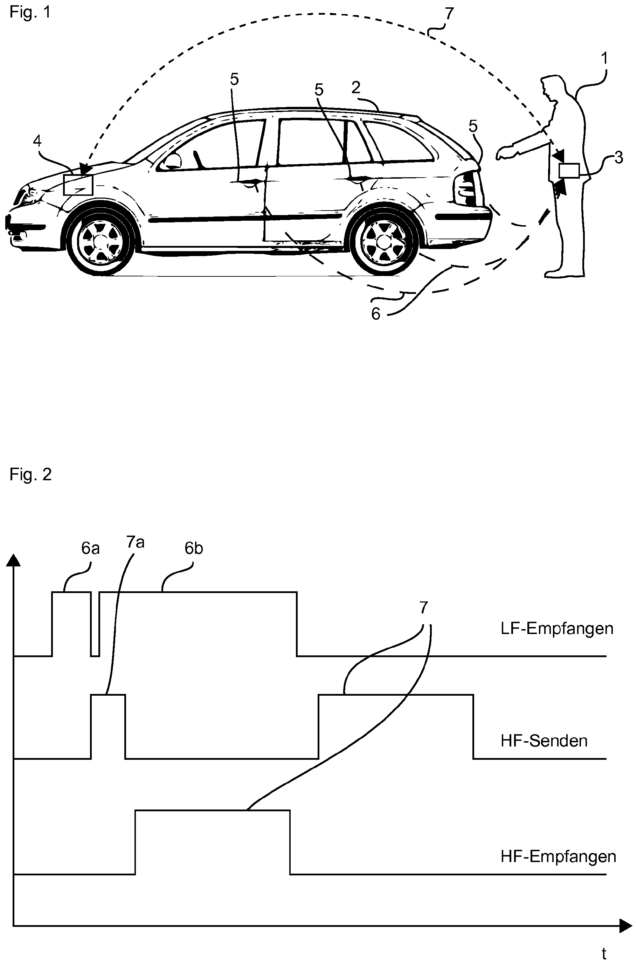

In Figur 1 ist gezeigt, dass ein Benutzer 1 auf ein Kraftfahrzeug 2 zugreifen will. Der Benutzer 1 führt einen ID-Geber 3 mit sich, der sich beispielsweise in der Jackentasche des Benutzers 1 befinden kann. Kraftfahrzeugseitig ist eine Steuereinrichtung 4 angeordnet. An einigen Positionen des Kraftfahrzeugs, in diesem Beispiel an den Türgriffen 5 sind Sendespulen zum Aussenden von niederfrequenten elektromagnetischen Signalen angeordnet.

Wird fahrzeugseitig eine Annäherung des Benutzers 1 an das Fahrzeug 2 detektiert, was durch Annäherungssensoren in den Griffen 5 erfolgt, werden die Sendespulen in den Türgriffen 5 zum Aussenden eines niederfrequenten Wecksignals 6 an den Benutzer angesteuert. Der ID-Geber 3 empfängt das Signal, wird aus seinem Bereitschaftszustand in einen Aktivitätszustand versetzt und sendet eine Kennung an das Kraftfahrzeug, wobei eine hochfrequente Trägerfrequenz 7 genutzt wird. Unter Hochfrequenz ist hier eine Frequenz von einigen 100 mHz, z.B. 433 mHz oder 868 mHz zu verstehen. Das zugehörige Hochfrequenzsignal 7 enthält Informationen über die Identität des ID-Gebers, wenn beispielsweise mehrere ID-Geber eine Zugangsberechtigung für ein Kraftfahrzeug bereitstellen.

Anschließend steuert das Steuergerät 4 des Kraftfahrzeuges die LF-Sendespulen in den Griffen 5 erneut an, um eine Signalfolge auf der Trägerfrequenz des Wecksignals 6 auszusenden. Diese Signalfolge wird im ID-Geber 3 empfangen und dieser ermittelt eine zugehörige Empfangssignalstärke. Während dieses Signal 6 vom Kraftfahrzeug 2 an den ID-Geber 3 ausgesandt wird, wird die HF-Kommunikation 7 zwischen ID-Geber und Fahrzeugsteuereinrichtung 4 fortgesetzt oder erneut aufgenommen, um Kennungsdaten vom ID-Geber 3 an die Steuereinrichtung 4 zu übermitteln. Dort werden diese Daten verifiziert, um eine Zugangsberechtigung zu prüfen. Sobald die Signalstärkenbestimmung im ID-Geber 3 abgeschlossen ist, wird außerdem die ermittelte Signalstärke über die Hochfrequenz-Funkverbindung 7 an das Fahrzeug übermittelt. Mit den dann vorliegenden Daten kann fahrzeugseitig verifiziert werden, ob eine Zugangsberechtigung zum Fahrzeug besteht.

Gemäß der Erfindung läuft im ID-Geber 3 zeitgleich ein LF-Empfangsvorgang des Signals 6 ab sowie eine HF-Kommunikation 7. Der Verifikationszeitraum für die gesamte Kommunikation kann dadurch deutlich verkürzt werden.

Figur 2 zeigt den schematischen in Figur 1 dargestellten Vorgang in einer Zeit-/Signaldarstellung, wobei die Zeitverläufe der Signale dargestellt sind. Zunächst wird vom Fahrzeug über die LF-Spulen das LF-Signal 6a ausgesandt. Der ID-Geber 3 antwortet nach dem Weckvorgang mit einem HF-Antwortsignal 7a. Unmittelbar nach Aussendung des Wecksignals oder nach Empfang des HF-Antwortsignals sendet das Fahrzeug eine LF-Signalfolge 6b aus. Zeitgleich erfolgt eine HF-Funkkommunikation 7b zwischen ID-Geber und Kraftfahrzeug. Die Signale sind in Figur 2 aus der Perspektive des ID-Gebers als Empfangssignale (receive) oder Sendesignale (send) gekennzeichnet. Anhand dieser Darstellung wird klar, dass die Zeitgleichheit zwischen LF-Empfang und HF-Funkkommunikation eine erhebliche Zeitersparnis für den gesamten Funkkommunikationsvorgang gewährt. Eine negative Beeinflussung des LF-Empfangs durch die HF-Signalfolgen besteht nicht.

## Patentansprüche

1. Verfahren zum Steuern eines schlüssellosen Zugangs zu einem Kraftfahrzeug, wobei mit einer ersten fahrzeugseitigen Sendeeinrichtung wenigstens ein niederfrequentes (LF) elektromagnetisches Wecksignal ausgesandt wird,
wobei mit einem vom Fahrzeug beabstandeten ID-Geber das LF-Wecksignal empfangen wird,
wobei von der fahrzeugseitigen Sendeeinrichtung wenigstens ein niederfrequentes (LF) elektromagnetisches Entfernungsbestimmungssignal ausgesandt wird,
wobei mit dem ID-Geber das Entfernungsbestimmungssignal empfangen wird und im ID-Geber wenigstens eine Feldstärkebestimmung zu dem empfangenen Entfernungsbestimmungssignal durchgeführt wird, und
wobei zwischen einer fahrzeugseitigen Sende- und Empfangseinrichtung und dem ID-Geber eine bidirektionale Hochfrequenzkommunikation (HF) ausgeführt wird, **dadurch gekennzeichnet, dass**
mittels eines multitaskingfähigen Systems im ID-Geber ein Empfang der niederfrequenten Signale und die bidirektionale Hochfrequenzkommunikation im Multitasking ausgeführt werden, wobei der Empfang von niederfrequenten Signalen (LF) im ID-Geber und eine Hochfrequenzkommunikation (HF) zwischen ID-Geber und Kraftfahrzeug wenigstens teilweise parallel ablaufen.

2. Verfahren nach Anspruch 1, wobei die bidirektionale Hochfrequenzkommunikation gestartet wird während das Entfernungsbestimmungssignal mit dem ID-Geber empfangen und die Feldstärkebestimmung durchgeführt wird.

3. Verfahren nach Anspruch 1 oder 2, wobei nach Durchführung der Feldstärkebestimmung die ermittelten Feldstärken vom ID-Geber in der bidirektionalen Hochfrequenzkommunikation an die fahrzeugseitige Sende-Empfangseinrichtung übermittelt werden.

## Claims

1. A method for controlling keyless access to a motor vehicle, wherein at least one low-frequency (LF) electromagnetic wake-up signal is emitted by a first vehicle-mounted transmission device, wherein
the LF wake-up signal is received by an ID-encoder located at a distance from the vehicle, wherein
at least one low-frequency (LF) electromagnetic distance determination signal is emitted by the vehicle-mounted transmission device, wherein
the distance determination signal is received by the ID-encoder, and in the ID-encoder at least one field strength determination is performed on the distance determination signal received, and wherein
a bi-directional high-frequency (HF) communication is executed between a vehicle-mounted transmission and reception device and the ID-encoder, **characterised in that**
by means of a system, capable of multitasking, in the ID-encoder, reception of the low-frequency signals and the bi-directional high-frequency communication are performed in the multitasking system, wherein the reception of low-frequency (LF) signals in the ID-encoder, and a high-frequency (HF) communication between the ID-encoder and the motor vehicle, proceed at least partially in parallel.

2. The method in accordance with claim 1, wherein the bi-directional high-frequency communication is initiated, while the distance determination signal is received by the ID-encoder, and the field strength determination is performed.

3. The method in accordance with Claim 1 or 2, wherein after the field strength determination has been performed, the field strengths determined are transmitted from the ID-encoder to the vehicle-mounted transmission-reception device in the bi-directional high-frequency communication.

## Revendications

1. Procédé de commande d'un accès sans clef à un véhicule automobile, au moins un signal d'appel électromagnétique à basse fréquence (BF) étant envoyé avec un premier dispositif d'émission du côté du véhicule,
le signal d'appel BF étant reçu avec un capteur d'identification (ID) à distance du véhicule,
au moins un signal de détermination de distance électromagnétique à basse fréquence (BF) étant envoyé par le dispositif d'émission du côté véhicule,
le signal de détermination de distance étant reçu avec le capteur ID et au moins une détermination d'intensité de champ étant passée dans le capteur ID au signal de détermination de distance reçu, et
une communication à haute fréquence (HF) bidirectionnelle étant exécutée entre un dispositif d'émission-réception du côté véhicule et le capteur ID, **caractérisé en ce qu'**
au moyen d'un système multitâche, une réception des signaux à basse fréquence et la communication à haute fréquence bidirectionnelle sont exécutées dans le capteur ID en mode multitâche, la réception de signaux à basse fréquence (BF) dans le capteur ID et une communication à haute fréquence (HF) se déroulant au moins en partie parallèlement entre le capteur ID et le véhicule automobile.

2. Procédé selon la revendication 1, la communication à haute fréquence bidirectionnelle étant lancée alors que le signal de détermination de la distance est reçu avec le capteur d'identification (ID) et la détermination d'intensité de champ est exécutée.

3. Procédé selon la revendication 1 ou 2, les intensités de champs obtenues étant transmises, après exécution de la détermination d'intensité de champ, par le capteur ID dans la communication à haute fréquence au dispositif d'émission-réception du côté véhicule.
